# DEMANDE DE BREVET EUROPEEN

(11) **EP 4 717 976 A1**
(43) Date de publication de la demande: **01.04.2026**
(21) Numéro de dépôt: 25205384.8
(22) Date de dépôt: 29.09.2025
(51) Int. Cl.: F23D 11/42

(54) **PROCÉDÉ POUR ENFLAMMER UN MÉLANGE D'UN COMBURANT ET D'UN CARBURANT DANS UNE CHAMBRE DE COMBUSTION D'UN LANCEUR SPATIAL**

(30) Priorité: 30.09.2024 FR 2410492
(71) Demandeur: Latitude, 51100 Reims (FR)
(72) Inventeur: HENRY GREARD, Thibault, 51100 REIMS (FR); DANET GARBARINI, Luca, 51100 REIMS (FR)
(74) Mandataire: IP Trust

(57) **Abrégé**

L'invention porte sur un procédé pour amorcer ou enflammer un mélange d'un comburant et d'un carburant dans une chambre de combustion d'un lanceur spatial caractérisé en ce qu'il comprend la mise en œuvre d'une étape d'injection de peroxyde d'hydrogène dit HTP décomposé via un catalyseur de manière à obtenir une température d'allumage prédéterminée.

## Description

La présente invention concerne un procédé d'amorçage de combustion d'un comburant, en particulier de l'oxygène liquide dit LOX, et d'un carburant, en particulier du RP1, ayant lieu dans une chambre de combustion d'un lanceur spatial.

Dans le domaine spatial, un système d'allumage permet d'enflammer le mélange généré par le système d'injection. Par exemple, il est connu des systèmes d'allumage de mélange de comburant et de carburant dans une chambre de combustion d'un lanceur spatial comprenant une torche GOX/CH4. Or, ce type de torche est reliée à deux réservoirs : un réservoir d'oxygène gazeux GOX et un réservoir de méthane CH4, ce qui entraine une embarcation supplémentaire de masse et d'encombrement.

L'invention vise à remédier à ce problème en proposant un nouveau mode de réalisation.

### OBJET DE L'INVENTION

A cet effet, et selon un premier aspect, l'invention propose un procédé pour amorcer une combustion ou enflammer un mélange d'un comburant et d'un carburant dans une chambre de combustion d'un lanceur spatial caractérisé en ce qu'il comprend la mise en oeuvre d'une étape d'injection de peroxyde d'hydrogène, dit HTP, décomposé via un catalyseur, de manière à obtenir une température d'allumage prédéterminée, dit d'amorce de combustion.

Ainsi, il est possible d'obtenir une amorce de combustion de manière efficiente. La décomposition du HTP à travers un lit catalytique permet d'apporter de l'énergie de manière à atteindre les conditions d'inflammation d'un mélange LOX et RP1. Dans le cas du RP1 comme carburant, il est nécessaire d'atteindre la température de 577 kelvins afin d'obtenir l'allumage.

De préférence, le carburant utilisé par le moteur est le RP1 et le comburant utilisé est l'oxygène liquide dit LOX.

On entend par RP1 (rocket petroleum 1), le carburant connu de la personne du métier dans le domaine spatial : une forme de kérosène spécialement raffiné en vue d'une utilisation comme carburant liquide stockable pour lanceurs spatiaux. En particulier, ce carburant est un un mélange de plusieurs alcanes et aromatiques, par exemple comprenant méthylbiphényle (avec %M = 17,4%), n-heptylcyclopentane (avec %M = 45,4 %), n-tridécane (avec %M = 37,2 %.

De préférence, le procédé prévoit un jet de HTP émis dans la chambre de combustion à une température d'au moins 1000 kelvins, de préférence d'au moins 1400 kelvins. Selon un mode de réalisation, la température est d'environ 1473 kelvins. Ce jet permet d'obtenir une température de gouttelettes de RP1 d'au moins 500 kelvins, de préférence d'au moins 580 kelvins.

L'injection peut présenter les paramètres suivants : débit entre 25 et 40g/s, et une pression dans la chambre de torche comprise entre 15 et 30 bar. Selon un mode de réalisation particulier, les paramètres d'injection peuvent être : débit 33g/s, durée 3 secondes, pression dans la chambre de torche de 9,63 bars.

De préférence, le catalyseur peut être des pellets d'Oxide de Manganèse (MnO2).

Il peut être prévu que seul le HTP soit utilisé.

Selon une variante de réalisation, au moins un additif est ajouté permettant d'améliorer la température de la flamme de la torche, en particulier pour rendre la décomposition de HTP plus énergétique. En particulier, l'additif est de l'alcool, par exemple éthanol.

La décomposition du HTP est une source externe d'allumage afin que la torche apporte l'énergie nécessaire pour allumer un mélange LOx/RP1. La décomposition du HTP seule peut suffire à allumer le mélange d'ergols dans la chambre de combustion du moteur. Il n'est pas prévu d'ajouter du RP1 supplémentaire.

Selon un deuxième aspect, l'invention concerne également un système d'allumage pour enflammer un mélange d'un comburant et d'un carburant dans une chambre de combustion d'un lanceur spatial comprenant ou étant relié à :
- un seul réservoir contenant du peroxyde d'hydrogène dit HTP,
- un catalyseur décomposant le peroxyde d'hydrogène dit HTP,
- une chambre de torche présentant un orifice d'injection du peroxyde d'hydrogène décomposé.

De préférence, l'orifice d'injection peut présenter un orifice compris entre 5 et 9 millimètres.

De préférence, la chambre de torche présente un diamètre intérieur compris entre 20 et 30 millimètres, de préférence entre 25 et 29 millimètres, une hauteur comprise entre 40 et 70 millimètres, de préférence entre 46 et 50 millimètres, une orientation angulaire dudit système au regard du plan de fixation de la chambre de combustion comprise entre 80 et 100 degrés, de préférence le système se trouvant à une distance d'au moins 70 millimètres de l'orifice du système d'injection, en particulier du type "pintle" ou à aiguille.

Par exemple, l'injecteur à aiguille dit "pintle" peut être un injecteur de propulseur pour un moteur-fusée à biergol ou bi-combustible. Il permet d'assurer un débit approprié et le mélange des combustibles lorsqu'ils sont injectés de force sous haute pression dans la chambre de combustion, afin qu'un processus de combustion efficace et contrôlé puisse se produire. En particulier, l'injecteur à aiguille peut être un type d'injecteur coaxial. Il se compose de deux tubes concentriques et d'une saillie centrale. Le combustible A (généralement l'oxydant) s'écoule à travers un tube extérieur, sortant sous forme de jet cylindrique, tandis que le combustible B (généralement le carburant) s'écoule dans un tube intérieur et frappe une saillie centrale en forme d'aiguille (de forme similaire à une soupape à champignon comme celles que l'on trouve sur les moteurs à quatre temps), pulvérisant dans un large cône ou une feuille plate qui coupe le jet cylindrique du combustible A.

De préférence, le système d'allumage comprend un dispositif de contrôle de débit d'injection du HTP dans le catalyseur, par exemple du type plaque d'injection.

### Le système d'allumage est agencé pour mettre en œuvre le procédé

Selon un troisième aspect, l'invention concerne également un moteur de lanceur spatial comprenant un système d'allumage comprenant l'une ou plusieurs des caractéristiques du deuxième aspect. De préférence, le moteur comprend un système d'injection du type "pintle" connu de la personne du métier.

### BREVE DESCRIPTION DES FIGURES

D'autres caractéristiques et avantages de l'invention ressortiront de la description détaillée de l'invention qui va suivre en référence aux figures annexées et dans lesquelles :
[Fig. 1] La figure 1 représente une vue en coupe d'une chambre de combustion d'un moteur de lanceur spatial, comprenant au moins une partie d'un système d'injection du type "pintle" et au moins une partie d'un système d'allumage ;
[Fig. 2] La figure 2 représente un agencement d'une torche raccordée à une chambre de combustion selon un mode de réalisation.

Pour plus de clarté, les éléments identiques ou similaires des différents modes de réalisation sont repérés par des signes de référence identiques sur l'ensemble des figures.

### DESCRIPTION DETAILLEE DE L'INVENTION

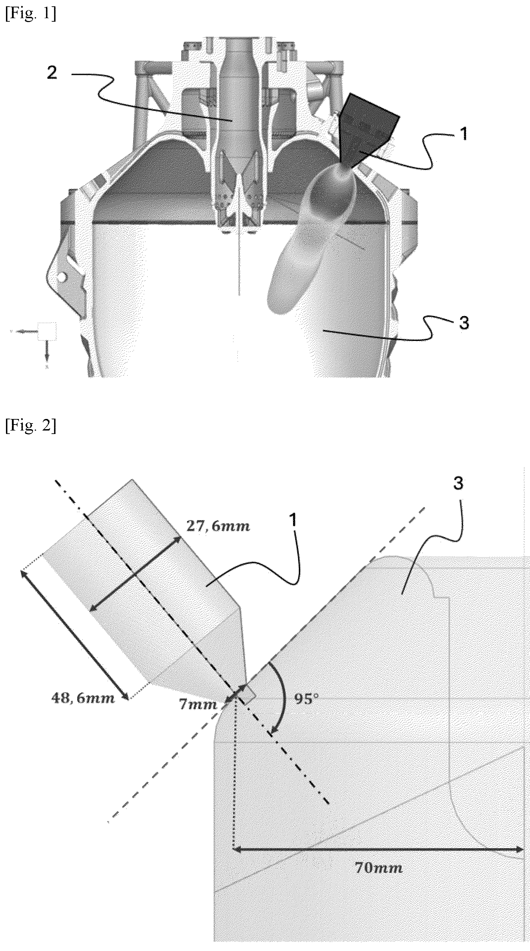

En relation avec les figures 1 et 2, il est décrit un mode de réalisation d'un système d'allumage ou torche. La figure 1 montre la disposition d'un système d'allumage 1 et d'un système d'injection 2 dont les orifices débouchent dans la chambre de combustion 3.

Le système d'allumage comprend :
- un seul réservoir contenant du peroxyde d'hydrogène dit HTP,
- un catalyseur décomposant le peroxyde d'hydrogène dit HTP,
- une chambre de torche présentant un orifice d'injection du peroxyde d'hydrogène décomposé et
- un dispositif de contrôle de débit d'injection du HTP dans le catalyseur, par exemple du type plaque d'injection.

La figure 2 montre un mode de réalisation particulier en termes de dimensions et de positionnement par rapport à la chambre de combustion et le système d'injection de type "pintle". Par exemple, le système d'allumage présente un diamètre d'orifice de 7 mm, un diamètre intérieur de torche de 27,6 mm, une hauteur de chambre de torche de 48,6 mm. De préférence, l'orifice du système d'allumage se situe à une distance de 70 mm. L'orientation angulaire dudit système au regard du plan de fixation de la chambre de combustion est d'environ de 95 degrés.

## Revendications

1. Procédé pour amorcer ou enflammer un mélange d'un comburant et d'un carburant dans une chambre de combustion d'un lanceur spatial **caractérisé en ce qu'**il comprend la mise en œuvre d'une étape d'injection de peroxyde d'hydrogène dit HTP décomposé via un catalyseur de manière à obtenir une température d'allumage prédéterminée.

2. Procédé selon la revendication 1, au cours duquel le carburant utilisé est le RP1 et le comburant utilisé est l'oxygène liquide dit LOX.

3. Procédé selon la revendication 1 ou 2, au cours duquel un jet de HTP est émis dans la chambre de combustion à une température d'au moins 1000 kelvins, de préférence d'au moins 1400 kelvins.

4. Procédé selon l'une des revendications 1 à 3, au cours duquel seul le HTP est utilisé.

5. Procédé selon l'une des revendications 1 à 3 au cours duquel au moins un additif, de préférence de l'alcool, par exemple éthanol, est ajouté.

6. Procédé selon l'une des revendications précédentes, au cours duquel l'injection présente les paramètres suivants : débit entre 25 et 40g/s, et une pression dans la chambre de torche comprise entre 15 et 30 bars.

7. Système d'allumage pour enflammer un mélange d'un comburant et d'un carburant dans une chambre de combustion d'un lanceur spatial comprenant ou étant relié à :
- un seul réservoir contenant du peroxyde d'hydrogène dit HTP, et
- un catalyseur décomposant le peroxyde d'hydrogène dit HTP,
- une chambre de torche présentant un orifice d'injection du peroxyde d'hydrogène décomposé.

8. Système selon la revendication précédente comprenant un diamètre d'orifice est compris entre 5 et 9 millimètres.

9. Système selon la revendication 7 ou 8 comprenant un diamètre intérieur de chambre de torche compris entre 20 et 30 millimètres, de préférence entre 25 et 29 millimètres, une hauteur comprise entre 40 et 70 millimètres, de préférence entre 46 et 50 millimètres, une orientation angulaire dudit système au regard du plan de fixation de la chambre de combustion comprise entre 80 et 100 degrés, de préférence le système se trouvant à une distance d'au moins 70 millimètres de l'orifice du système d'injection.

10. Moteur de lanceur spatial comprenant un système d'allumage selon l'une des revendications 7 à 9 et un système d'injection du type injecteur à aiguille.
